# EUROPEAN PATENT SPECIFICATION

(11) **EP 1 330 687 B1**
(45) Date of publication and mention of the grant of the patent: **01.09.2004**
(21) Application number: 01983775.6
(22) Date of filing: 22.10.2001
(51) Int. Cl.: G05B 19/4065

(54) **METHOD AND RELEVANT DEVICE FOR THE AUTOMATIC SUPERVISION OF THE DEGREE OF WEAR OF THE TOOLS EMPLOYED IN THE UNMANNED MECHANICAL WORKING**
VERFAHREN UND ZUTREFFENDE VORRICHTUNG ZUR AUTOMATISCHEN ÜBERWACHUNG DES VERSCHLEISSZUSTANDES VON IN UNBEMANNTER MECHANISCHER BEARBEITUNG BENUTZTEN WERKZEUGE
PROCEDE ET DISPOSITIF DE CONTROLE AUTOMATIQUE DU DEGRE D'USURE D'OUTILS UTILISES DANS DES OPERATIONS D'USINAGE SANS OUVRIER

(30) Priority: 24.10.2000 IT RM20000560
(43) Date of publication of application: 30.07.2003
(73) Proprietor: CONSIGLIO NAZIONALE DELLE RICERCHE, 00185 Roma (IT)
(72) Inventor: FARRELLY, Francis Allen, I-00185 Roma (IT); PETRI, Alberto, I-00185 Roma (IT); PITOLLI, Luca, I-00185 Roma (IT); PONTUALE, Giorgio, I-00185 Roma (IT); CANNELLI, Giovanni, Bosco, I-00185 Roma (IT)
(74) Representative: Iannone, Carlo Luigi
(86) International application number: PCT/IT2001/000534
(87) International publication number: WO 2002/036304

(56) References cited:
- EP-A- 0 371 631
- EP-A- 0 465 696
- GB-A- 2 009 406
- US-A- 4 455 862
- US-A- 5 905 440

## Description

The present invention relates to a method, and relevant device for the automatic supervision of the mechanical workings in the industries, particularly the reveal of the wear and/or anomalous operation of the tool employed for mechanical workings. Said device is the development of a previous arrangement, already subject matter of an Italian Patent Application (I), with respect to which substantial modifications have been introduced, said modifications being described in the following. The modifications introduced aim to give to the device a better reliability, thus increasing their efficiency under an applicative point of view, with particular reference to the heavy environmental working conditions, such as those encountered in an industrial factory, wherein remarkable electromagnetic noise levels are present.

The solution suggested according to the technique object of the already mentioned patent (I) to reveal the wear and/or anomalous operation of the tool during turning workings, it is based on the study of the signal generated by the workpiece - tool assembly in the so-called "acoustic emission band" that, as it can be read from many scientific works on this argument already known in the literature since 70's, is particularly interesting for this application (see, for example: E. Kannatey-Asibu et al. "Quantitative relationship for Acoustic Emission from Orthogonal Metal Cutting", Journal of Engineering for Industry, Agosto 1981, Vol. 103 pp. 330-340 [2])

By Acoustic Emission (in the following referred as AE), it is meant the fast release of energy within solids, in the form of high frequency acoustic waves, due for example to the recovery of the crystalline structure, modified by a remarkable stress, in the specific case deriving from the sharp cut on the metal (see for example: K.Iwata et al, "An application of Acoustic Emission to In-Process Sensing of Tool Wear", Annals of CIRP Vol. 25, 1977, pp. 21-26, [3]). Said acoustic waves have a very wide frequency spectrum, generally included in the band between some tenth of kHz and some tenth of MHz. In the artide: G.Byrne et al., "Tool Condition Monitoring (TCM) The status of Research and Industrial Application", Annals of CIRP, Vol.44/2, 1995, pp.541-567, [4], an excellent review about the reasons and the fundamental principles of the use of devices based on Tool Condition Monitoring techniques (in the following referred as TCM) in the industry, sensors used in the industrial uses, development perspective, as well as very rich bibliography on this argument are contained.

It is underlined the importance of the AE signal processing signals in the uses aimed to the supervision of the wear condition of the tools, and how the revealing of the AE< signals as closer as possible to the zone where they are generated is fundamental for the reliability of the technique. Consequently, a limitation of the known analyses and supervision methods for the mechanical workings, adopting the solution of the analyses of AE band waves, is individuated in the fact that the features of the commercial used transducers are not completely suitable for this particular application. In fact, said sensors have sizes in the order of centimetres, and cannot be thus placed in a position very close to the cut insert.

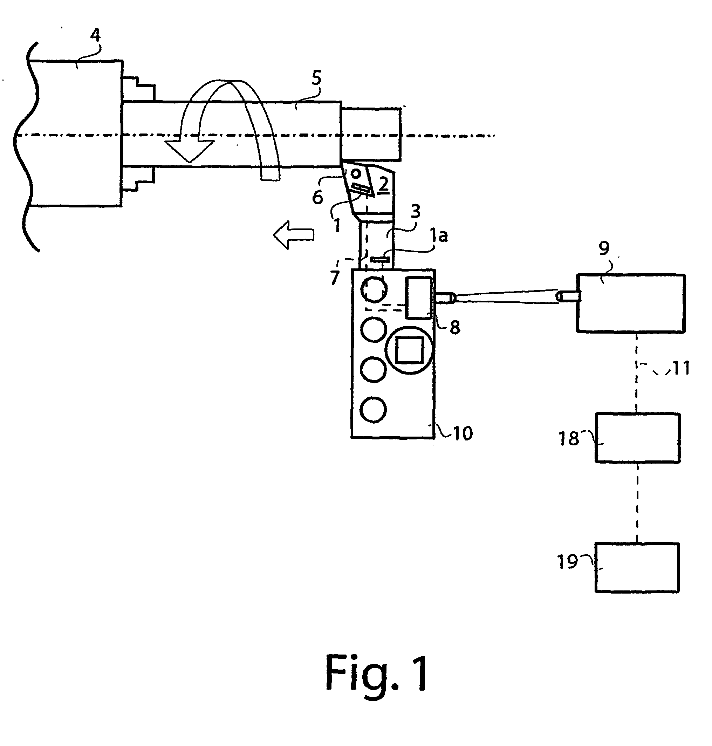

For example, they are often fixed to the base of the insert carrier (3) (see figure 1), and it is thus evident that the structures by which the acoustic signal propagates before reaching the sensor, have a suitable response curve altering the signal containing the information (see also the already mentioned document of K. Iwata e T. Moriwaki "An Application of Acoustic Emission to In-Processing Sensing of Tool Wear" [3],, and also E. Kannatey-Asibu, E. Emel "Linear discriminant function analysis of acoustic emission signal for cutting tool monitoring", Mechanical Systems and Signal Processing, Vol. 1 (1987), pag. 333 [5]).

Proper implementation on the AE signals of algorithms both of the statistic kind and of the type based on "pattern recognition" techniques (both known in this field), applicable to the wear monitoring, requires the exact knowledge of the original shape of the signal, both in the time and in the frequency domain, to obtain which it would be necessary to make the de-convolution of the signal obtained by the transform of the structure transfer function. It would involve a remarkable time and money expense, besides the loss of generality about the possible uses of the method and of the relevant device. in fact, it would be necessary to carry out very long preliminary operations, employing skilled personnel, for each kind of machine tool. Besides the great difficulties in obtaining the original signal, due to the needing of studying its propagation up to the sensor, signals in the acoustic emission band are quickly attenuated, with the relevant arising of problems for the amplification of the signal (signal - noise ratio).

A further disadvantage of the known technique is the fact that this kind of devices must necessarily exclude the use of connection wires to transmit data from the sensor to the processing system. In fact, wire prevent from using an automatic supervision and/or anomaly of the tool (insert) in cases when the insert carrier (3) (where it is usually placed the sensor) is part of a complex mechanical device, able to carry out different workings and thus provided with multiple tool carrying turrets, often movable and operating within a oil bath. In case of automatic working operations by rotating turrets supporting different tools, possibly different each other, possible presence of connection wires or cables would represent a barrier for the turret movement. Recently the following techniques have been tested in order to overcome this difficulty (G. Byrne et al.):
a) transmission of the signals by devices working on the magnetic induction principle; ..
b) transmission of the signals by the cooling fluid; this technique has the necessity of employing cooling fluid air bubble free, and furthermore, it is very sensible to the noises due to the chips passage within the same liquid;
c) transmission of the signals by a fluid different with respect to the cooling one having magnetic properties (H₂O + Fe₃O₄).

However, feasibility and reliability of these techniques must still be demonstrated, although they in any case present known drawbacks, that will be mentioned in the following (G. Byrne at al.).

Previous patent (I) aimed to solve the known technical problems realising a very versatile method, and the relevant device, that can be generally used for different kind of machine tools and of workings, and by which statistic type algorithms are applied to AE signals. In this case, the solution of the problem relevant to the presence of connection wires is assigned to a miniaturised radiofrequency data conditioning and transmission device, AE signal, previously amplified and filtered, modulates a carrier radiofrequency signal of about 400 MHz, generated by an oscillator, and is transmitted to the antenna of the receiving and processing device. The latter provides to generate a control signal about the wear condition of the monitored tool, providing the relevant information or, in case the conditions require this, interrupting the working.

It is therefore specific object of the present invention a method for the automatic supervision of mechanical workings, based on the acoustic emission (AE), characterised in that the signal to be used for the automatic supervision is obtained by the subtraction of two different AE signals, acquired by two sensors, the first sensor substantially revealing the acoustic signal, generated by the workpiece and juxtaposed to the electromagnetic disturbance signal, the second sensor substantially revealing the only disturbance signal, the resulting signal being transmitted to a processing and control system.

Preferably, said two signals revealed by said two sensors are before amplified and filtered.

Still according to the invention, signal obtained by the subtraction of said two signals revealed by said two sensors is before processed and converted.

Always according to the invention, the method according to the invention is further characterised by the fact that said signal obtained by the subtraction is transmitted by ether to said processing and control system.

Furthermore, ether transmission in said method is made within the infrared band.

It is further specific object of the present invention, a device for the automatic supervision of mechanical workings, based on the acoustic emission (AE) due to the working of a metallic piece by the tool, characterised in that it comprises two sensors or transducers, a unit for the preliminary processing, subtraction of said signals and ether transmission of the signal obtained, a receiving unit and a processing and control system.

Furthermore, according to the invention, said sensor or transducer can be placed in the position of the insert carrier, or of the tool support.

Preferably, according to the invention, said sensor or transducer can be comprised of a miniaturised plate made up of piezolectrical material.

Still according to the invention, said miniaturised plate made up of piezoelectric material can have a thickness between 0.8 and 2 mm.

Preferably, according to the invention, said second sensor or transducer can be comprised of a piezoelectric material plate.

Furthermore, according to the invention, said first sensor or transducer and/or said second sensor or transducer is placed on the support.

Always according to the invention, said second sensor or transducer is placed on said support, without acoustic coupling with the same, being thus assigned to substantially reveal only the electromagnetic noises present.

Preferably, according to the invention, said first sensor is identical to said second sensor.

Furthermore, according to the invention, said transmission device is placed in or on the tool-bearing turret, or close to the same turret.

Further, ether transmission device of the signals is destined to the transmission within the infrared band.

Still according to the invention, said ether transmission device for the signals comprises amplifiers and filters, a subtracter, a signal conditioner, and an infrared modulator and transmitter.

Further, said device is so realised to make said amplifiers and filters operating within the AE band.

According to the present invention, ether signal receiver device is destined to receive in the infrared band.

Further, receiver device comprises a photosensitive element operating in the infrared band.

Still, according to the invention, the receiving, processing and control unit to which the electric signal obtained by the processing of the signals acquired by the sensors or transducers is sent, is assigned to the determination of the statistic parameters of the RMS signal, based on known statistic algorithms.

Finally, said device can comprise a first unit and a second unit, for the acquisition, processing and control, said units being assigned to the managing of the possible wear and/or anomaly condition of the insert.

The solution suggested according to the present invention, allows to obtain different advantages:
a) easy in obtaining a high directivity of the signals in the IR band with respect to the microwave band, makes it practically non-existent cross-talk problems between similar devices present on adjacent tool machines, thus making unnecessary signal codification operations;
b) electromagnetic disturbances emitted from the apparatuses present in the industrial plant drastically reduces with the increasing of the frequency; thus, communications in the IR bad are highly free from said problem;
c) a second reference transducer (1a), identical to the first one, is employed to subtract to the signal received from the first one, possible non-acoustic kind disturbances. In fact, being it acoustically uncoupled from the insert holder (3), it only receives signals deriving from electromagnetic noises, thus also received from the first transducer (1). The above is basic in order to cancel the electromagnetic disturbances, incident on the same transducer, from the events mainly of the acoustic kind, by a subtraction made by simple dedicated electronics.

Object of the suggested modification is thus that of overcoming the problems of the previous arrangement (1), due to the high presence of electromagnetic noises in the industrial plants, noises making practically useless most of the above mentioned techniques, the introduction of which has been tested to control the workings. It should be sufficient to think that if a arc welding is carried out, radiation emitted is such to obscure for a long time interval every device dedicated to the transmission of the signals via ether, both the previous one, and those based on different principles, such as the inductive electromagnetic transmission, or on the transmission through fluid means, different from the cooling means, having magnetic properties. It must be taken into consideration that in the already known devices, and used in the industries, 38% has been eliminated or replaced, due to their non-correspondence to the required requisites. (G. Byrne ate al.).

The present invention will be now described, for illustrative but not limitative purposes, according to its preferred embodiments, with particular reference to the figures of the enclosed drawings, wherein:
figure 1 shows the simplified operation scheme to apply the inventive method to the lathe mechanical working;
figure 2 is a simplified block diagram of the miniaturised rice-transmission, system with a signal in the infrared band, as well as data acquisition, processing and control, according to the invention;
figure 3 shows the flow of the (*r*)*s* parameters of the statistic distribution function beta applied to the RMS values of the AE signals. It is relevant to the brass lathe working, for new and wear tools;
figure 4 instead shows the flow of the (*r*)*s* parameters, with reference to the lathe working of the AISI 303 steel, for new and wear tools.

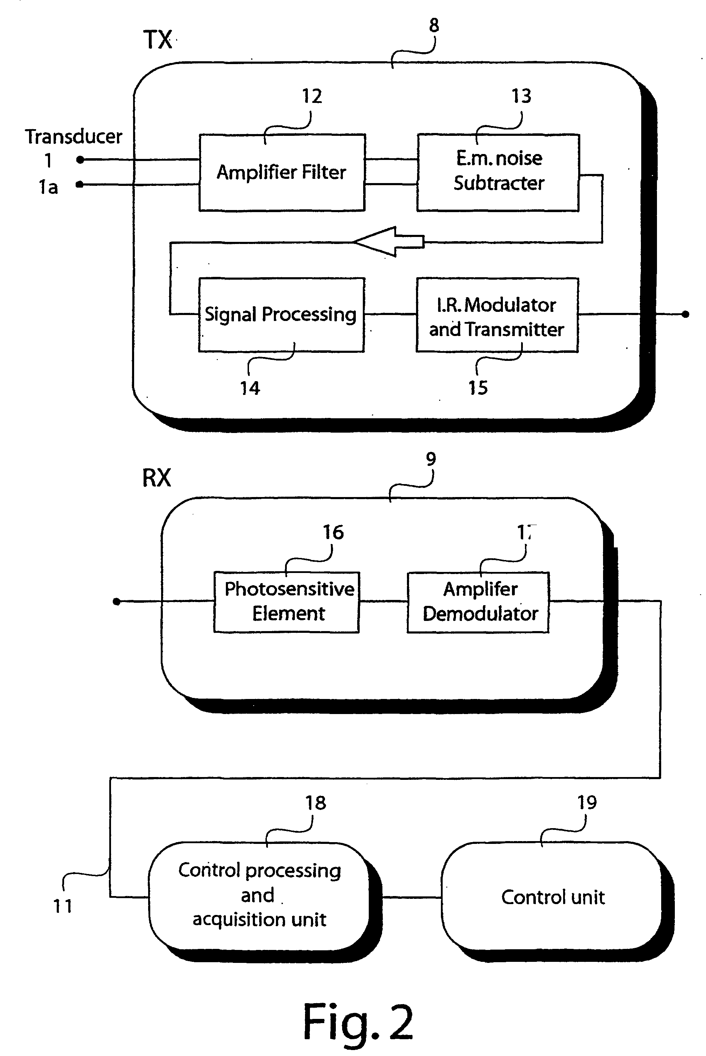

Physical sensors 1 and 1a (AE piezoelectric sensors) are realised according to the present invention as a piezoelectric ceramic miniaturised plate, cut with a parallelepiped shape, employing high precision techniques, having some millimetres sizes. Sensor 1 is designed to receive waves in a broad frequency band, typical of AE. It is placed on the insert holder 3, protected by possible damages deriving from the lathe 4 working of the metallic workpiece 5. Reference number 6 indicates the tool (insert) to be replaced in case of its wear and/or anomaly. Physical sensor 1 is fixed in position 2 in such a way to guarantee, in correspondence of said face of the ceramic piezoelectric parallelepiped, a good electric and acoustic coupling, as well as a safe mechanical coupling. Said face is the mass ( zero potential). The other face (opposite face) of the sensor 1 is connected, by the electric line 7, to the processing and transmission system or device 8, more specifically shown in figure 2. Transducer 1a is coupled to this device, fixed in such a way to eliminate the acoustic contact with the insert-holder 3. Technique suggested in the present invention is based on a data statistic treatment, during the signal processing phase, making it superfluous the absolute calibration of the transducers. it must be noted that the miniaturised device 8 for the transmission in the IR band is placed on the (or in the) tool holder turret 10, or close to the same, in such a way to be connected by a short wire (7) to the sensor (1). Device 9 is shown in a more specific way in figure 2. Rice-transmitter system 8, 9 allows the wireless transfer of AE signals revealed from sensor 1 toward acquisition and processing unit 18. Possible rotations or translations of the turret 10, that in certain cases can comprise different tools 6, each of which is connected to its sensors 1 and 1a, do not interfere with, thanks to the fact that AE signal is wireless transmitted to the processing system. Making reference to figure 2, in the block diagram of the transmission miniaturised device 8, signals coming from sensors 1 and 1a through line 7 are sent to the block 12. It is comprised of two amplifiers and filters amplifying and filtering signals in a suitable interval of the AE band of the present application. Within block 13, two signals coming from the previous block are subtracted each other, in such a way to delete the components due to the electromagnetic noises from those of acoustic kind. Signal thus obtained passes to the treatment phase 14, where it is processed with reference to the used algorithm, in such a way to obtain some meaningful parameters necessary to the following processing and control phases. The above in order to drastically reduce performances required to the wireless transmission system for the passing band. After this phase, signal is transmitted, by a system operating in the IR band, by the modulator and transmitter 15, to the receiving block 9 wherein the photo-sensitive receiving element 16 is contained. Signal taken from said block is amplified and demodulated in phase 17, and sent to the central acquisition and processing unit 18, and finally to the control unit 19. The above is valid both in case of more than one monitoring devices, mounted on different machine tools, all connected to a single control central unit 19, for example placed in a dedicated area, and in case of a single device, dedicated to a single machine tool.

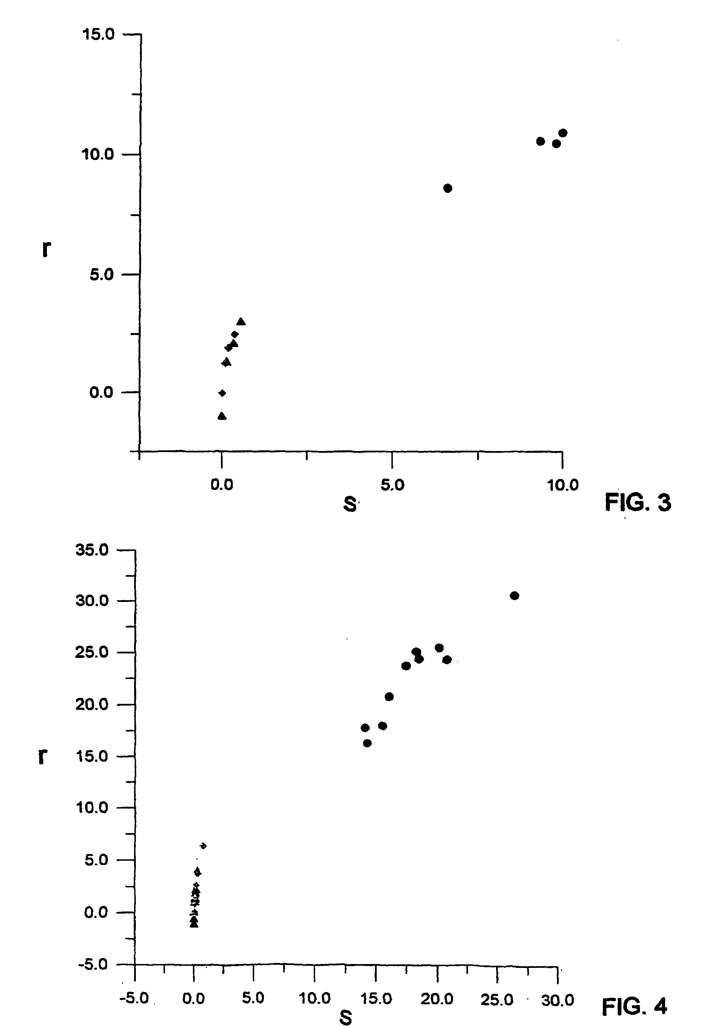

The acquisition, processing 18 and control 19 units can be integrated in a single computerised system by which the signal is processed by a (known) algorithm within the time domain with the upper moments of statistic distribution β function of RMS signal. Particularly, associated statistic parameters *r* and *s* (see, for example: E. Kannatey-Asibu, D.A. Domfeld "A Study of Tool Wear Using Statistical Analysis of Metal-Cutting Acoustic Emission", Wear, Vol. 76 (1982) pp. 247-261 [6]), allow to individuate the wear status of the tool, as it can be noted from the results shown in diagram r(s) of figures 3 and 4, referring to the brass and INOX stainless steel working, respectively. In the diagram, triangle and rhombus indicate new tools, while the circle indicates a wear tool. It can be noted a clear separation of the corresponding experimental points. Technique according to the present invention, based on the miniaturisation of AE sensor, and on its placing on the insert-holder, overcomes all the above mentioned difficulties, and can be applied also to the more complex cases of mechanical workings. Acquisition, processing and control units can also receive and process signals coming from more devices placed on one or more machine tools. In this way, it is also possible to check at the same time the evolution of the wear state of all the inserts operating in the industrial plant. Tools usually employed are sintered tungsten carbide, but it is not excluded the use of other materials.

### BIBLIOGRAPHY

[1] - Patent Application RM98A000043 - "Method and relevant device based on the acoustic emission for the automatic supervision of the mechanical workings", 23/01/98;
[2] - E. Kannatey-Asibu et al. "Quantitative relationship for Acoustic Emission from Orthogonal Metal Cutting", Journal of Engineering for Industry, Agosto 1981, Vol. 103 pp. 330-340
[3] - K.Iwata et al., "An application of Acoustic Emission to In-Process Sensing of Tool Wear", Annals of CIRP Vol. 25, 1977, pp. 21-26
[4] - G.Byrne et al., "Tool Condition Monitoring (TCM)- The status of Research and Industrial Application", Annals of CIRP, Vol. 44/2, 1995, pp. 541-567;
[5] - E. Kannatey-Asibu, E. Emel "Linear discriminant function analysis of acoustic emission signal for cutting tool monitoring", Mechanical Systems and Signal Processing, Vol. 1 (1987), pag. 333
[6] - E. Kannatey-Asibu, D.A. Dornfeld "A Study of Tool Wear Using Statistical Analysis of Metal-Cutting Acoustic Emission", Wear, Vol. 76 (1982) pp. 247-261

## Claims

1. Method for the automatic supervision of mechanical workings, based on the acoustic emission (AE), **characterised in that** the signal to be used for the automatic supervision is obtained by the subtraction of two different AE signals, acquired by two sensors, the first sensor substantially revealing the acoustic signal, generated by the workpiece and juxtaposed to the electromagnetic disturbance signal, the second sensor substantially revealing the only disturbance signal, the resulting signal being transmitted to a processing and control system.

2. Method according to claim 1, **characterised in that** said two signals revealed by said two sensors are before amplified and filtered.

3. Method according to claim 1 or 2, **characterised in that** said signal obtained by the subtraction of said two signals revealed by said two sensors is before processed and converted.

4. Method according to one of the preceding claims, **characterised in that** said signal obtained by the subtraction is transmitted by ether to said processing and control system.

5. Method according to claim 4, **characterised in that** ether transmission is made within the infrared band.

6. Device for the automatic supervision of mechanical workings, based on the acoustic emission (AE) generated by the working of a metallic piece (5) by the tool (6), **characterised in that** it comprises two sensors or transducers (1 or 1a), a unit (8) for the preliminary processing, subtraction of said signals and ether transmission of the obtained signal, a receiving unit (9) and a processing and control system (18, 19).

7. Device according to claim 6, **characterised in that** said sensor or transducer (1) is placed in the position of the insert holder (3), or of the tool support (6).

8. Device according to claim 6 or 7, **characterised in that** said sensor or transducer (1) is comprised of a miniaturised plate made up of piezolectrical material.

9. Device according to claim 8, **characterised in that** said miniaturised plate made up of piezoelectric material has a thickness between 0.8 and 2 mm.

10. Device according to one of the claims 6 - 9, **characterised in that** said second sensor or transducer (1a) is comprised of a piezoelectric material plate (1a).

11. Device according to one of the claims 6 - 10, **characterised in that** said first sensor or transducer (1) and/or said second sensor or transducer (1a) is placed on the support (3).

12. Device according to claim 10, **characterised in that** said second sensor or transducer (1a) is placed on said support (3), without acoustic coupling with the same, being thus assigned to substantially reveal only the electromagnetic noises present.

13. Device according to one of the claims 6 - 12, **characterised in that** said first sensor (1) is identical to said second sensor (1a).

14. Device according to one of the claims 6 - 13, **characterised in that** said transmission device (8) is placed in or on the tool bearing turret (10), or close to the same turret (10).

15. Device according to one of the claims 6 - 14, **characterised in that** ether transmission device (8) of the signals is destined to the transmission within the infrared band.

16. Device according to one of the claims 6 - 15, **characterised in that** said ether transmission device (8) for the signals comprises amplifiers and filters (12), a subtracter (13), a signal conditioner (14), and an infrared modulator and transmitter (15).

17. Device according to claim 16, **characterised in that** said amplifiers and filters (12) operate within the AE band.

18. Device according to one of the claims 6 - 17, **characterised in that** ether signal receiver device (9) is destined to receive in the infrared band.

19. Device according to one of the claims 6 - 18, **characterised in that** receiver device (9) comprises a photosensitive element (16) operating in the infrared band.

20. Device according to one of the claims 6 - 19, **characterised in that** the receiver device (9) comprises a demodulating amplifier (17).

21. Device according to one of the claims 6 - 20, **characterised in that** receiving, processing and control unit (19) to which the electric signal obtained by the processing of the signals acquired by the sensors or transducers (1, 1a) is sent, is assigned to the determination of the statistic parameters of the RMS signal, based on known statistic algorithms.

22. Device according to one of the claims 6 - 21, **characterised in that** said device comprises a first unit (18) and a second unit (19), for the acquisition, processing and control, said units being assigned to the managing of the possible wear and/or anomaly condition of the insert (6).

## Patentansprüche

1. Verfahren zur automatischen Überwachung von mechanischen Bearbeitungen, das auf der akustischen Emission (AE) basiert, **dadurch gekennzeichnet, dass** das Signal, das für die automatische Überwachung verwendet werden soll, durch die Subtraktion von zwei verschiedenen AE-Signalen erhalten wird, die durch zwei Sensoren erfasst wurden, wobei der erste Sensor im Wesentlichen das akustische Signal liefert, das durch das Werkstück erzeugt und mit dem elektromagnetischen Störsignal nebeneinander gestellt wird, und der zweite Sensor im Wesentlichen nur das Störsignal liefert, wobei das sich ergebende Signal zu einem Verarbeitungs- und Kontrollsystem übertragen wird.

2. Verfahren nach Anspruch 1, **dadurch gekennzeichnet**, das die zwei durch die zwei Sensoren gelieferten Signale vorverstärkt und gefiltert werden.

3. Verfahren nach Anspruch 1 oder 2, **dadurch gekennzeichnet, dass** das durch die Subtraktion der zwei Signale erhaltene Signal, die durch die zwei Sensoren geliefert wurden, vorverarbeitet und konvertiert wird.

4. Verfahren nach einem der vorhergehenden Ansprüche, **dadurch gekennzeichnet, dass** das durch die Subtraktion erhaltene Signal drahtlos zu dem Verarbeitungs- und Kontrollsystem übertragen wird.

5. Verfahren nach Anspruch 4, **dadurch gekennzeichnet, dass** die drahtlose Übertragung im Infrarotband erfolgt.

6. Einrichtung zur automatischen Überwachung von mechanischen Bearbeitungen, die auf der akustischen Emission (AE) basiert, die durch die Bearbeitung eines metallischen Stücks (5) durch das Werkzeug (6) erzeugt wird, **dadurch gekennzeichnet, dass** sie zwei Sensoren oder Wandler (1 oder 1a), eine Einheit (8) zur Vorbearbeitung, Subtraktion der Signale und drahtlosen Übertragung des erhaltenen Signals, eine Empfangseinheit (9) und ein Verarbeitungs- und Kontrollsystem (18, 19) umfasst.

7. Einrichtung nach Anspruch 6, **dadurch gekennzeichnet, dass** der Sensor oder Wandler (1) in der Position des Einsetzhalters (3) oder des Werkzeugträgers (6) angeordnet ist.

8. Einrichtung nach Anspruch 6 oder 7, **dadurch gekennzeichnet, dass** der Sensor oder Wandler (1) eine miniaturisierte Platte umfasst, die aus piezoelektrischem Material hergestellt ist.

9. Einrichtung nach Anspruch 8, **dadurch gekennzeichnet, dass** die miniaturisierte Platte aus piezoelektrischem Material hergestellt ist, das eine Dicke zwischen 0.8 mm und 2 mm aufweist.

10. Einrichtung nach einem der Ansprüche 6 - 9, **dadurch gekennzeichnet, dass** der zweite Sensor oder Wandler (1a) eine Platte (1a) aus piezoelektrischem Material umfasst.

11. Einrichtung nach einem der Ansprüche 6 - 10, **dadurch gekennzeichnet, dass** der erste Sensor oder Wandler (1) und/oder der zweite Sensor oder Wandler (1a) auf dem Träger (3) angeordnet ist.

12. Einrichtung nach Anspruch 10, **dadurch gekennzeichnet**, das der zweite Sensor oder Wandler (1a) auf dem Träger (3) ohne eine akustische Kopplung mit diesem angeordnet und damit dazu eingerichtet ist, im Wesentlichen nur das gegebene elektromagnetische Rauschen zu liefern.

13. Einrichtung nach einem der Ansprüche 6 - 12, **dadurch gekennzeichnet, dass** der erste Sensor (1) identisch zum zweiten Sensor (1a) ist.

14. Einrichtung nach einem der Ansprüche 6 - 13, **dadurch gekennzeichnet, dass** die Übertragungseinrichtung (8) in oder auf dem das Werkzeug tragenden Revolver (10) oder nahe bei diesem Revolver (10) angeordnet ist.

15. Einrichtung nach einem der Ansprüche 6 - 14, **dadurch gekennzeichnet, dass** die Übertragungseinrichtung (8) zur drahtlosen Signalübertragung zur Übertragung im Infrarotband eingerichtet ist.

16. Einrichtung nach einem der Ansprüche 6 - 15, **dadurch gekennzeichnet, dass** die Übertragungseinrichtung (8) zur drahtlosen Signalübertragung Verstärker und Filter (12), einen Subtrahierer (13), einen Signalkonditionierer (14) und einen Infrarot-Modulator und Transmitter (15) umfasst.

17. Einrichtung nach Anspruch 16, **dadurch gekennzeichnet, dass** die Verstärker und Filter (12) in dem AE-Band arbeiten.

18. Einrichtung nach einem der Ansprüche 6 - 17, **dadurch gekennzeichnet, dass** die Empfängereinrichtung (9) für drahtlose Signale dazu eingerichtet ist, im Infrarotband zu empfangen.

19. Einrichtung nach einem der Ansprüche 6 - 18, **dadurch gekennzeichnet, dass** die Empfängereinrichtung (9) ein photoempfindliches Element (16) umfasst, das im Infrarotband arbeitet.

20. Einrichtung nach einem der Ansprüche 6 - 19, **dadurch gekennzeichnet, dass** die Empfängereinrichtung (9) einen Demodulationsverstärker (17) umfasst.

21. Einrichtung nach einem der Ansprüche 6 - 20, **dadurch gekennzeichnet, dass** die Empfänger-, Verarbeitungs- und Kontrolleinheit (19), zu der das elektrische Signal gesendet wird, das durch die Verarbeitung der durch die Sensoren oder Wandler (1, 1a) gelieferten Signale erhalten wird, basierend auf bekannten statistischen Algorithmen zur Bestimmung des statistischen Parameters des RMS-Signals eingerichtet ist.

22. Einrichtung nach einem der Ansprüche 6 - 21, **dadurch gekennzeichnet, dass** die Einrichtung eine erste Einheit (18) und eine zweite Einheit (19) zur Lieferung, Verarbeitung und Kontrolle umfasst, wobei diese Einheiten zur Beaufsichtigung eines möglichen Abriebs und/oder einer anormalen Bedingung des Einsatzes (6) eingerichtet sind.

## Revendications

1. Procédé de supervision automatique de travaux d'usinage, basé sur l'émission acoustique (AE), **caractérisé en ce que** le signal à utiliser pour la supervision automatique est obtenu par soustraction de deux différents signaux AE, acquis par deux capteurs, le premier capteur révélant sensiblement le signal acoustique, généré par la pièce et juxtaposé au signal de perturbation électrique, le second capteur révélant sensiblement le seul signal de perturbation, le signal résultant étant transmis à un système de traitement et de commande.

2. Procédé selon la revendication 1, **caractérisé en ce que** lesdits deux signaux révélés par lesdits deux capteurs sont auparavant amplifiés et filtrés.

3. Procédé selon la revendication 1 ou 2, **caractérisé en ce que** ledit signal obtenu par soustraction desdits deux signaux révélés par lesdits deux capteurs est auparavant traité et converti.

4. Procédé selon l'une quelconque des revendications précédentes, **caractérisé en ce que** ledit signal obtenu par soustraction est transmis dans l'éther audit système de traitement et de commande.

5. Procédé selon la revendication 4, **caractérisé en ce que** la transmission dans l'éther est effectuée dans la bande infrarouge.

6. Dispositif de supervision automatique de travaux d'usinage, basé sur l'émission acoustique (AE) générée par l'usinage d'une pièce métallique (5) par l'outil (6), **caractérisé en ce qu'**il comprend deux capteurs ou transducteurs (1 ou 1a), une unité (8) de traitement préliminaire, de soustraction desdits signaux et de transmission dans l'éther du signal obtenu, une unité réceptrice (9) et un système de traitement et de commande (18, 19).

7. Dispositif selon la revendication 6, **caractérisé en ce que** ledit capteur ou transducteur (1) est positionné à l'emplacement du support de l'insert (3), ou du support de l'outil (6).

8. Dispositif selon la revendication 6 ou 7, **caractérisé en ce que** ledit capteur ou transducteur (1) comprend une plaque miniaturisée faite d'un matériau piézo-électrique.

9. Dispositif selon la revendication 8, **caractérisé en ce que** ladite plaque miniaturisée faite d'un matériau piézo-électrique a une épaisseur comprise entre 0,8 et 2mm.

10. Dispositif selon l'une quelconque des revendications 6-9, **caractérisé en ce que** ledit second capteur ou transducteur (1a) comprend une plaque de matériau piézo-électrique (1a).

11. Dispositif selon l'une quelconque des revendications 6-10, **caractérisé en ce que** ledit premier capteur ou transducteur (1) et/ou ledit second capteur ou transducteur (1a) est placé sur le support (3).

12. Dispositif selon la revendication 10, **caractérisé en ce que** ledit second capteur ou transducteur (1a) est placé sur ledit support (3), sans couplage acoustique avec celui-ci, ayant donc pour mission de ne révéler sensiblement que les bruits électromagnétiques présents.

13. Dispositif selon l'une quelconque des revendications 6-12, **caractérisé en ce que** ledit premier capteur (1) est identique audit second capteur (1a).

14. Dispositif selon l'une des revendications 6-13, **caractérisé en ce que** ledit dispositif de transmission (8) est placé dans ou sur l'outil supportant la tourelle (10) ou à proximité de cette tourelle (10).

15. Dispositif selon l'une des revendications 6-14, **caractérisé en ce que** le dispositif de transmission dans l'éther (8) des signaux est destiné à transmettre dans la bande infrarouge.

16. Dispositif selon l'une des revendications 6-15, **caractérisé en ce que** ledit dispositif de transmission dans l'éther (8) des signaux comprend des amplificateurs et des filtres (12), un soustracteur (13), un conditionneur de signaux (14), et un modulateur et un émetteur infrarouges (15).

17. Dispositif selon la revendication 16, **caractérisé en ce que** lesdits amplificateurs et filtres (12) opèrent dans la bande AE.

18. Dispositif selon l'une des revendications 6-17, **caractérisé en ce que** le dispositif récepteur de signaux dans l'éther (9) est destiné à recevoir dans la bande infrarouge.

19. Dispositif selon l'une des revendications 6-18, **caractérisé en ce que** le dispositif récepteur (9) comprend un élément photosensible (16) opérant dans la bande infrarouge.

20. Dispositif selon l'une des revendications 6-19, **caractérisé en ce que** le dispositif récepteur (9) comprend un amplificateur de démodulation (17).

21. Dispositif selon l'une des revendications 6-20, **caractérisé en ce que** l'unité de réception, de traitement et de commande (19) à laquelle le signal électrique obtenu par traitement de signaux acquis par les capteurs ou transducteurs (1, 1a) est envoyé, a pour mission de déterminer les paramètres statistiques du signal efficace, en utilisant des algorithmes statistiques connus.

22. Dispositif selon l'une des revendications 6-21, **caractérisé en ce que** ledit dispositif comprend une première unité (18) et une seconde unité (19) d'acquisition, de traitement et de commande, lesdites unités ayant pour mission de gérer l'usure et/ou toute anomalie éventuelle de l'insert (6).
